# NOUVEAU FASCICULE DE BREVET EUROPEEN

(11) **EP 0 517 944 B2**
(45) Date de publication et mention de la décision concernant l'opposition: **04.08.1999**
(45) Mention de la délivrance du brevet: 11.10.1995
(21) Numéro de dépôt: 91109769.9
(22) Date de dépôt: 14.06.1991
(51) Int. Cl.: A23P 1/16, A23D 9/00

(54) **Produit alimentaire et procédé de préparation**
Nahrungsmittel und Verfahren zur Herstellung
Foodstuff and method for its preparation

(43) Date de publication de la demande: 16.12.1992
(73) Titulaire: SOCIETE DES PRODUITS NESTLE S.A., 1800 Vevey (CH)
(72) Inventeur: Badertscher, Ernest, CH-1350 Orbe (CH); Brülhart, Marianne, CH-8234 Stetten (CH)

(56) Documents cités:
- EP-A- 0 256 561
- EP-A- 0 274 348
- EP-A- 0 381 259
- DE-A- 1 925 170
- FR-A- 2 302 046
- FR-A- 2 397 792
- FR-A- 2 541 868
- FR-A- 2 541 870
- US-A- 1 921 275
- US-A- 4 826 696
- US-A- 4 834 991

## Description

La présente invention a trait à un produit alimentaire pouvant facilement être étalé, de préférence pauvre en matière grasse et en sucre, et à son procédé de préparation.

Il est connu, par le brevet US 3.969.534, de préparer un produit laitier fermenté pauvre en matière grasse pouvant se conserver longtemps à température ambiante, par chauffage à 38-65°C d'un mélange d'une base laitière fermentée et d'un stabilisant tel que l'amidon, puis homogénéisation du mélange chauffé et pasteurisation à 76-93°C. Il est connu, par le brevet US 4.569.846, de préparer un produit laitier fermenté pouvant être conservé en tube à 5°C ou à 20°C et pouvant facilement être pressé hors de son tube tout en conservant une bonne cohésion, par fermentation lactique d'une émulsion huile-dans-eau contenant une matière grasse et un produit lacté écrémé et/ou des protéines de soja.

Il est connu, par FR 2 541 870, un procédé dans lequel seule une partie des ingrédients est foisonnée, consistant à préparer un prémélange à sec d'une partie des ingrédients, à en réduire la granulométrie, puis à y ajouter une mousse de sucre. II est encore connu, par FR 2 397 792, un procédé dans lequel on brasse un mélange sec pulvérulent avec une matière grasse liquide qui va l'enrober, de manière à obtenir une masse pâteuse homogène que l'on peut ensuite extruder ou couler dans des moules. Une opération de débullage de la masse pâteuse est prévue afin d'éliminer les bulles d'air présentes dans ladite masse pâteuse.

EP0381259 décrit un procédé amélioré de préparation d'un beurre d'arachide. L'amélioration consiste à remplacer le broyage traditionnel des graines d'arachide par un affinage de graines d'arachide dégraissées jusqu'à réduction de la taille des particules à moins de 13-18 microns suivi d'un mélange avec de l'huile d'arachide. Le beurre d'arachide ainsi obtenu peut être foisonné par dispersion de 5-25% en volume d'un gaz inerte dans la masse.

La demanderesse s'est posée le problème de préparer un produit alimentaire, contenant peu de matière grasse et de sucre, ledit produit se présentant, de manière avantageuse, sous forme foisonnée et aérée, et possédant une texture légère.

La présente invention a pour but de proposer un procédé permettant la préparation dudit produit.

A cet effet, le procédé selon la présente invention, dans lequel on prépare un mélange comprenant au moins une matière grasse et une matière additive affinable, à savoir une matière dont la granulométrie des particules de matière solide peut être réduite par lissage, de manière à obtenir un mélange comprenant au maximum 30% en poids de matières grasses libres, on affine le mélange ainsi préparé jusqu'à obtention d'une granulométrie maximale de 30 µm, est remarquable par le fait que l'on foisonne le mélange affine à une température de 20-25°C jusqu'a obtention d'une densité apparente de 700 à 900 gl⁻¹ tout en ajoutant au mélange affiné 0,1 à 3 parties, par partie de mélange affiné, de matière grasse.

Le produit alimentaire obtenu par le présent procédé peut se présenter sous forme d'une pâte facilement tartinable ou sous forme d'une barre ou tablette dure et cassante.

Un avantage de l'invention est de permettre l'obtention d'un produit stable microbiologiquement contenant très peu d'eau et pouvant être conservé à température ambiante pendant une longue période. Un autre avantage est de permettre l'obtention d'un produit pouvant être enrichi en fibres et/ou en nutriments tels que des vitamines et des sels minéraux. Un autre avantage est de permettre l'obtention d'un produit pouvant être aromatisé par exemple par ajout d'agents aromatisants, de chocolat, de fruits.

Dans la suite de la présente description, les pourcentages et parties sont donnés en poids.

Dans le procédé de préparation objet de la présente invention, on prépare un mélange comprenant au moins une matière grasse et une matière additive affinable. Ladite matière grasse peut être une matière grasse d'origine lactique ou végétale telle que, par exemple, une huile de beurre, une huile de tournesol, une huile de soja ou un mélange de différentes matières grasses. On peut choisir les matières grasses en fonction de leur température de fusion, selon la consistance que l'on souhaite pour le produit final.

Ainsi, pour obtenir un produit très fluide et onctueux, on peut employer par exemple, un mélange de 30-40% de matière grasse solide à 20-25°C et de 60-70% de matière grasse liquide à 20-25°C.
Si l'on souhaite un produit final plus dur, par exemple du type tablette à croquer, on peut employer un mélange de 85-95% de matière grasse solide et 5-15% de matière grasse liquide.
La matière additive comprend toute matière affinable, c'est-à-dire dont la granulométrie des particules de matière solide peut être réduite par lissage, telle que, par exemple, des fibres, des sucres et/ou une base fermentée.

Ainsi, dans une forme d'exécution particulière du présent procédé, on peut préparer un mélange comprenant 2 à 2,5 parties de matière grasse d'origine lactique, 0,5 à 2 parties de matière grasse d'origine végétale, 4 à 7 parties de libres alimentaires et 0 à 1 partie de nutriments tels que des sels minéraux et des vitamines. On peut effectuer le mélange à une température de 40° C, dans un mélangeur planétaire, un pétrin ou tout autre mélangeur susceptible de travailler des mélanges pâteux.

Dans une seconde forme d'exécution particulière du présent procédé, on peut préparer un mélange comprenant 0,5 à 3 parties de matière grasse d'origine lactique , 0,5 à 1 partie de matière grasse d'origine végétale 1 à 3 parties d'une base fermentée et 2 à 4 parties d'au moins un sucre, tel que le saccharose.

Ladite base fermentée peut être obtenue par fermentation d'un prémélange acidifié comprenant notamment une matière lactée et une céréale hydrolysée.
Ladite matière lactée peut être, par exemple, du lait écrémé et/ou des protéines du petit lait.
Ladite céréale hydrolysée peut être, par exemple, une matière amylacée telle qu'un gruau, une farine ou un amidon de céréale ou d'un mélange de céréales ou toute autre matière végétale riche en amidon, ayant été hydrolysée, notamment une céréale hydrolysée enzymatiquement comme le décrit le brevet EP 31050.
La céréale hydrolysée présente, de préférence, un DE (équivalent dextrose) de l'ordre de 30-35.
Ledit prémélange acidifié peut comprendre, par exemple, en parties en poids de matière sèche, 5-10 parties de céréale hydrolysée, 8-20 parties de lait écrémé et/ou de protéines du petit lait et 0-5 parties de matière grasse lactique et/ou végétale, auxquelles on peut ajouter de l'eau en quantité suffisante pour obtenir un taux de matière sèche de environ 25-35% en poids, afin d'assurer une fermentation correcte.
La fermentation dudit prémélange peut être effectuée à l'aide d'une culture de yogourt, pendant environ 3-5 heures, à 40-45°C, jusqu'à obtention d'un pH de 4,2-5,0. Le prémélange fermenté peut ensuite être pasteurisé, puis séché, par exemple par atomisation, afin d'obtenir une base fermentée présentant un taux de matière sèche de 95-98% en poids.

On peut effectuer le mélange de la matière grasse, de préférence préalablement ramollie à 40-60°C, et de la matière additive dans un mélangeur planétaire ou un pétrin, à une température de 40-60°C.
On peut travailler le mélange obtenu pendant 2-10 minutes, à une vitesse de 50-80 tours par minute, en maintenant la température à 40-60°C, de manière à obtenir un mélange présentant une consistance homogène. Il est possible d'ajouter au mélange ainsi préparé des nutriments tels que des sels minéraux et/ou des vitamines, des agents aromatisants tels que la cannelle ou la vanille, de la poudre de cacao, de la pulpe de fruits.

On affine le mélange ainsi préparé, à l'aide par exemple d'une affineuse comparable à celles utilisées dans la technique chocolatière.

L'affinage consiste à réduire par lissage la granulométrie des particules de matière solide prises dans la matière grasse, afin de les rendre impalpables sous la langue lors de la consommation du produit. On réduit la granulométrie des particules jusqu'à une taille maximale d'environ 30 µm, par exemple en faisant passer le mélange dans une affineuse à 3 ou 5 cylindres sous une pression de 8-12 bars et à une température de 40-60°C.
Dans le cas où les particules de matière solide présentes dans le mélange après le premier passage dans l'affineuse ont une granulométrie supérieure à celle souhaitée, il est possible d'effectuer un deuxième, voire un troisième passage du mélange dans l'affineuse, dans les mêmes conditions de température et de pression. On obtient ainsi un mélange affiné de granulométrie maximale d'environ 30 µm, se présentant généralement sous forme de petits flocons comparables à des morceaux de chocolat râpé.

Avant ou pendant le foisonnement, on ajoute au mélange affiné 0,1 à 3 parties de matière grasse par partie de mélange affiné.
On ajoute de préférence une matière grasse d'origine végétale possédant une bonne stabilité thermique, en quantité telle que la quantité totale de matière grasse contenue dans 10 parties de produit final soit d'au moins 3 parties, dont au moins 25% de matière grasse d'origine végétale possédant une bonne stabilité thermique, c'est-à-dire un point de fusion d'au moins 32°C.
La matière grasse a en fait pour fonction de former un réseau cristallin solide qui permet de retenir dans le produit l'air qu'on y incorpore lors du foisonnement, et donc de conserver au produit final un aspect de mousse aérée.

Si l'on souhaite un produit final se présentant sous une forme dure et cassante, la matière grasse totale doit être composée de 80-95% de matière grasse possédant un point de fusion d'au moins 32°C.

Le mélange affiné est alors foisonné.
Le foisonnement consiste à battre le produit en mousse, c'est-à-dire à y introduire de l'air, afin d'obtenir une texture légère et aérée.
Le foisonnement peut être effectué à l'aide d'un mélangeur planétaire équipé d'un fouet, tournant à une vitesse de 80-120 tours par minute ou à l'aide d'un échangeur à surface raclée.
On effectue le foisonnement à une température de 20-25°C.
En effet, on a constaté que lorsque le foisonnement est effectué à une température inférieure à 20°C, le mélange devient dur et peut difficilement être battu.
Lorsque le foisonnement est effectué à une température supérieure à 25°C, le mélange devient fluide et ne peut plus retenir l'air qu'on y incorpore par battage.
Le foisonnement peut être effectué pendant 1 à 3 minutes de manière à obtenir un produit final présentant une densité apparente de 700 à 900 gl⁻¹.

Dans la première forme d'exécution du procédé, on obtient ainsi un produit final comprenant une matière grasse, des fibres et des nutriments présentant une texture légère et aérée et pouvant s'étaler facilement.

Ce produit peut ainsi être constitué d'un mélange affiné comprenant 2-2,5 parties de matière grasse d'origine lactique, 0,5 à 2 parties d'une matière grasse d'origine végétale, 4 à 7 parties de fibres alimentaires et 0-1 partie de nutriments, et de 0,1 à 3 parties, par partie de mélange affiné, de matière grasse.

Ce produit contient de préférence 30 à 80% de matière grasse, et peut donc être utilisé comme substitut de beurre ou de margarine.
De plus, ce produit ne contient presque pas d'eau et peut se conserver pendant une longue période à température ambiante.

Dans la seconde forme d'exécution du procédé, on obtient un produit complet, contenant peu de matière grasse et de sucre, enrichi en nutriments et pouvant facilement être tartiné, par exemple sur une tranche de pain.

Ce produit peut ainsi être constitué d'un mélange affiné comprenant 0,5 à 3 parties de matière grasse d'origine lactique, 0,5 à 1 parties de matière grasse d'origine végétale, 1 à 3 parties d'une base fermentée et 2 à 4 parties de sucre, et de 0,1 à 3 parties,par partie de mélange affiné, de matière grasse.

Le produit ainsi obtenu peut alors être conditionné, de préférence directement après sa préparation, lorsque la masse du produit est encore "souple", afin que la fixation de la structure et de la texture du produit, due à la cristallisation des matières grasses qu'il contient, se fasse dans l'emballage.

La présente invention est illustrée plus en détails dans les exemples ci-après.

### Exemple 1

On mélange dans un mélangeur planétaire 250 g d'huile de beurre et 50 g d'huile de tournesol à 40°C, on ajoute au mélange ainsi préparé 700 g de fibres alimentaires, des vitamines A, C et E ainsi que des sels minéraux.
On travaille le mélange pendant environ 5 minutes, à une vitesse de 60 tours par minute tout en maintenant la température à 40°C, jusqu'à obtention d'une consistance homogène.

On déverse le mélange ainsi travaillé dans une affineuse à 3 cylindres, dans laquelle on entretient une pression de 10 bars et une température de 40°C.
On effectue 2 passages du mélange sur les cylindres de manière à obtenir une granulométrie des particules d'environ 28 µm.
On obtient un produit se présentant sous forme de flocons, semblables à des rapures de chocolat.
Le mélange affiné est alors introduit dans un mélangeur planétaire équipé d'un fouet, et est foisonné, à une température de 22-23°C, à une vitesse de 100 tours par minute pendant environ 2 minutes, jusqu'à obtention d'une densité apparente de 800 gl⁻¹.

Pendant le foisonnement, on ajoute 275 g d'huile de beurre.

On obtient ainsi un produit aéré, contenant 45% de matière grasse, moins de 1% d'eau, et présentant une activité de l'eau de 0,3. Ce produit peut facilement être étalé par exemple sur une tranche de pain.

### Exemple 2

On prépare tout d'abord un prémélange comprenant 1,0 kg de lait écrémé en poudre, 200 g d'huile de beurre, 600 g de farine de blé préalablement hydrolysée enzymatiquement selon la méthode décrite dans le brevet EP 31050 et présentant un taux de matière sèche de 40%, 100 g d'huile d'arachide et 3,3 l d'eau de manière à obtenir un taux de matière sèche d'environ 30 %.
On ajoute au prémélange ainsi préparé une culture de Streptococcus thermophilus et de Lactobacillus bulgaricus du commerce, et on laisse fermenter à 42°C, pendant environ 4 heures, jusqu'à obtention d'un pH de 4,5.
Le prémélange fermenté est alors séché par atomisation à 90°C et permet d'obtenir une base fermentée présentant un taux de matière sèche de 97%.

On mélange, dans un mélangeur planétaire, 0,5 kg de matière grasse d'origine végétale vendue sous le nom de Biscuitine-N par SAIS, 0,5 kg d'huile de beurre et 0,5 kg d'huile de tournesol préalablement ramollies à 40°C, on ajoute 2,0 kg de base fermentée préparée telle que précédemment, 3,0 kg de saccharose et 0,5 kg de poudre de fraise, et l'on travaille le mélange ainsi formé à une vitesse de 60 tours par minute, à 40°C, pendant 5 minutes.
Le mélange travaillé est alors affiné dans une affineuse à 5 cylindres, sous une pression de 10 bars et une température de 40°C.
On obtient un produit, à une température de 40-42°C, se présentant sous forme de petits flocons et de granulométrie maximum de 30 µm.
Le mélange affiné est alors introduit dans un mélangeur planétaire équipé d'un fouet et est foisonné, à une température de 22-23°C, à une vitesse de 100 tours par minute.
Pendant le foisonnement du mélange, on ajoute 3,0 kg de Biscuitine-N afin de tenir l'air incorporé dans la masse du produit et lui conserver son aspect moussé.
On obtient alors un produit aéré pouvant facilement s'étaler, présentant une densité apparente de 800 gl⁻¹, contenant 0,85% d'eau et présentant un Aw de 0,3, que l'on peut conditionner immédiatement dans des pots en verre.

## Revendications

1. Procédé de préparation d'un produit alimentaire, dans lequel on prépare un mélange comprenant au moins une matière grasse et une matière additive affinable, à savoir une matière dont la granulométrie des particules de matière solide peut être réduite par lissage, de manière à obtenir un mélange comprenant au maximum 30% en poids de matières grasses libres, on affine le mélange ainsi préparé jusqu'à obtention d'une granulométrie maximale de 30 µm, caractérisé par le fait que l'on foisonne le mélange affiné à une température de 20-25°C jusqu'à obtention d'une densité apparente de 700 à 900 gl⁻¹ tout en ajoutant au mélange affiné 0,1 à 3 parties, par partie de mélange affiné, de matière grasse.

2. Procédé selon la revendication 1, dans lequel on ajoute au mélange affiné 0,1 à 3 parties, par partie de mélange affiné, de matière grasse d'origine végétale possédant une bonne stabilité thermique, à savoir présentant un point de fusion d'au moins 32°C, en quantité telle que la quantité totale de matières grasses contenue dans 10 parties de produit final soit d'au moins 3 parties, dont au moins 25% de matière grasse d'origine végétale possédant une bonne stabilité thermique.

3. Procédé selon la revendication 1, dans lequel on prépare un mélange à affiner comprenant 2-2.5 parties de matière grasse d'origine lactique, 0.5-2 parties de matières grasses d'origine végétale, 4-7 parties de fibres alimentaires et 0-1 partie de nutriments.

4. Procédé selon la revendication 1, dans lequel on prépare un mélange à affiner comprenant 0.5-3 parties de matière grasse d'origine lactique, 0.5-1 partie de matières grasses d'origine végétale, 1-3 parties de base fermentée et 2-4 parties de sucre.

## Claims

1. Method for producing a food product, wherein a mixture is prepared containing at least one fat and a refinable additive material, namely a material of which the size of the particles of solid matter may be reduced by smoothing, so as to obtain a mixture including at most 30 % by weight of free fats, the mixture thus prepared is refined until a maximum particle size of 30 µm is obtained, characterized in that the refined mixture is aerated at a temperature of 20-25°C until an apparent density of 700 to 900 gl⁻¹ is obtained while adding to the refined mixture 0.1 to 3 parts of fats per part of refined mixture.

2. Method according to claim 1, wherein there are added to the refined mixture 0.1 to 3 parts, per part of refined mixture, of fats of vegetable origin having good thermal stability, namely having a melting point of at least 32°C, in such a quantity that the total quantity of fats contained in 10 parts of the final product is at least 3 parts, of which at least 25 % consist of fats of vegetable origin having good thermal stability.

3. Method according to claim 1, wherein a mixture to be refined is prepared containing 2-2.5 parts of fats of milk origin, 0.5-2 parts of fats of vegetable origin, 4-7 parts of food fibres and 0-1 part of nutriments.

4. Method according to claim 1, wherein a mixture to be refined is prepared containing 0.5-3 parts of fats of milk origin, 0.5-1 part of fats of vegetable origin, 1-3 parts of a fermented base and 2-4 parts of sugar.

## Patentansprüche

1. Verfahren zur Herstellung eines Nahrungsmittels, wobei man ein Gemisch herstellt, das wenigstens ein Fett und einen verfeinerbaren Zusatzstoff enthält, nämlich ein Material, dessen Korngröße der Feststoffteilchen durch Glätten reduziert werden kann, um ein Gemisch zu erhalten, welches maximal 30 Gew.-% an freien Fetten enthält; und wobei man das so hergestellte Gemisch so lange verfeinert, bis man eine maximale Korngröße von 30 µm erhalten hat; dadurch gekennzeichnet, daß man das Volumen des verfeinerten Gemisches bei einer Temperatur von 20 bis 25°C so lange vergrößert, bis man ein Schüttvolumen von 700 bis 900 g/l erreicht hat, während gleichzeitig zu dem verfeinerten Gemisch 0,1 bis 3 Teile Fett auf 1 Teil des verfeinerten Gemisches zugegeben werden.

2. Verfahren nach Anspruch 1, wobei zu dem verfeinerten Gemisch 0,1 bis 3 Teile eines Pflanzenfettes pro Teil des verfeinerten Gemisches zugegeben werden, welches Pflanzenfett eine gute Wärmebeständigkeit aufweist, nämlich einen Schmelzpunkt von wenigstens 32°C hat, und zwar in einer solchen Menge, daß die in 10 Teilen des Endproduktes enthaltene Gesamtfettmenge wenigstens 3 Teile beträgt, wovon wenigstens 25 % ein Pflanzenfett mit einer guten Wärmebeständigkeit sind.

3. Verfahren nach Anspruch 1, wobei man ein zu verfeinerndes Gemisch herstellt, welches 2 bis 2,5 Teile Milchfett, 0,5 bis 2 Teile Pflanzenfett, 4 bis 7 Teile Nahrungsfasern und 0 bis 1 Teile Nährstoffe enthält.

4. Verfahren nach Anspruch 1, wobei man ein zu verfeinerndes Gemisch herstellt, das 0,5 bis 3 Teile Milchfett, 0,5 bis 1 Teile Pflanzenfett, 1 bis 3 Teile fermentierte Basis und 2 bis 4 Teile Zucker enthält.
